(19) **Europäisches Patentamt**
**European Patent Office**
**Office européen des brevets**

(11) **EP 3 006 234 B1**

(12) **EUROPEAN PATENT SPECIFICATION**

(45) Date of publication and mention
of the grant of the patent:
**11.01.2017 Bulletin 2017/02**

(51) Int Cl.:
**B60C 23/04** (2006.01)   **B60W 40/13** (2012.01)
**G01G 19/08** (2006.01)

(21) Application number: **14187877.7**

(22) Date of filing: **07.10.2014**

(54) **Method for judging abnormal loading of vehicles**

Verfahren zur Beurteilung von abnormalem Laden von Fahrzeugen

Procédé de détermination de charge anormale de véhicules

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.04.2016 Bulletin 2016/15**

(73) Proprietor: **Sung Jung Minute Industry Co., Ltd.
307 Cyonglin Township, Hsinchu County (TW)**

(72) Inventor: **Huang, Wen-Huo
307 Hsinchu County (TW)**

(74) Representative: **2K Patentanwälte Blasberg
Kewitz & Reichel
Partnerschaft mbB
Schumannstrasse 27
60325 Frankfurt am Main (DE)**

(56) References cited:
**EP-A2- 2 679 411        DE-A1-102011 004 028
US-A1- 2003 058 118**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to an inspection method of vehicles and particularly to a method for judging abnormal loading of vehicles.

BACKGROUND OF THE INVENTION

Nowadays people have growing awareness on driving safety. In response to such a phenomenon many vehicle plants have provided a detection device on a vehicle to monitor driving safety, such as a vehicle display to record vehicle driving journey or a tire pressure monitoring system (TPMS in short) to measure tire pressure of the vehicle. Take inspection of vehicle abnormal loading for instance, vehicle abnormal loading generally means that when a vehicle carries a load a tire of the vehicle bears the load and generates deformation to make the interior space of tire smaller, and the tire pressure increases to support the load.

DE 10 2011 004 028 A1 discloses a method for determining the load of a motor vehicle, according to the preamble of claim 1, including the following steps: detecting at least one physical measured variable that depends on the load and generating a measured value that represents the detected measured variable; evaluating the generated measured values in order to determine the load by correlating the generated measured values or the load values determined therefrom with each other in order to produce a correction value from the correlation, with the aid of which an actual load value is determined for the load of the motor vehicle. There is also provided a system for detecting the load of a motor vehicle, and a motor vehicle.

EP 2 679 411 A2 discloses a method of estimating a load bearing on a vehicle tire. The method comprises: deploying a deformation measuring sensor in the tire, the deformation measuring sensor generating a cyclical tire deformation signal indicative of tire deformation in a contact patch of a rolling tire; deploying a tire inflation pressure measuring sensor in the tire, the inflation pressure measuring sensor measuring tire inflation pressure from within a tire cavity, and calculating a tire rolling speed estimation based upon the tire deformation signal; calculating a tire contact patch length estimation based upon the tire deformation signal; and calculating a load estimation on the tire based upon the tire inflation pressure, the tire contact patch length estimation, and the tire rolling speed estimation. Also, a system of estimating a load bearing on a vehicle tire is disclosed. The system comprises a vehicle tire supporting a load; an inflation pressure measuring sensor; and a deformation measuring sensor. The deformation measuring sensor comprises a piezoelectric sensor. Furthermore, the system comprises a programmed data processor for calculating a contact patch length estimation from the deformation signal; a programmed data processor for calculating a tire rolling speed estimation from the deformation signal; and an artificial neural network programmed to adaptively interpret the tire rolling speed estimation, the contact patch length estimation, and the measured inflation pressure of the tire and generate an output load estimation based thereon.

US 2003 / 058 118 A1 discloses a vehicle and a vehicle tire monitoring system, an apparatus and a method determining the load-induced deflection or deformation of a vehicle tire and based thereon, deflection-related information, such as tire load, molar air content, total vehicle mass and distribution of vehicle mass. The tire deflection region or contact region of the loaded tire is detected by sensing the acceleration of the rotating tire by means of an accelerometer mounted on the tire, preferably on an inner surface such as the tread lining thereof. As the tire rotates and the accelerometer is off of the contact region, a high centrifugal acceleration is sensed. Conversely, when the accelerometer is on the contact region and not rotating, a low acceleration is sensed. The deflection points delimiting the contact region are determined at the points where the sensed acceleration transitions between the high and low values.

At present inspection of vehicle abnormal loading mainly is performed via a universal Hell formula to do assessment and calculation to get tire loading data of the tire. However, due to tire structure is quite complex in general, while the universal Hell formula can provide the tire loading data, during its estimate process of the tire loading data the actual tire deformation amount is not being taken into account, hence the generated tire loading data could be not coincide with the actual circumstance.

SUMMARY OF THE INVENTION

The primary object of the present invention is to solve the problem of the conventional inspection method that does not take into account of the actual change of the tire, hence is prone to create errors.

To achieve the foregoing object the present invention provides a method for judging abnormal loading of vehicles that is adoptable on a vehicle. The vehicle includes a plurality of tires. Each tire includes at least one tire parameter to represent tire characteristics, and is equipped with a tire pressure detection unit. The tire pressure detection unit detects in normal conditions the interior status of the tire and outputs a tire pressure at a selected inspection time period. The method includes the steps as follows:

Step 1: Receive tire pressures generated by the tire pressure detection unit at a plurality of inspection time periods and calculate variation amount of the tire pressure within each inspection time period and convert to a gradient data;

Step 2: Judge whether the gradient data is positive in value, if positive, enter the next step; if negative, redo execution of step 1;

Step 3: Calculate the tire pressure obtained at the last time and the tire parameter via a tire sinking amount calculation formula to get a tire deformation amount, and calculate the tire pressure obtained at the last time and the tire parameter via a loading calculation formula to get a tire loading data; and

Step 4: Compare the tire loading data and the tire deformation amount through a tire abnormal condition; in the event that the tire loading data and the tire deformation amount coincide with the tire abnormal condition, judge the vehicle in abnormal loading.

In one embodiment the tire sinking amount calculation formula is as follow:

$$P - \cfrac{P_0 V_0}{V_0 - \left[ \cfrac{2\sin^{-1}(\cfrac{\sqrt{2Rf \quad f^2}}{R})\pi R^2}{360} - \cfrac{(2\sqrt{2Rf - f^2})(R - f)}{2} \right] b}$$

where R, $V_0$, $P_0$ and b are respectively the tire parameters of the tire, R is a tire radius, $V_0$ is an original volume of the tire without loading, $P_0$ is an original tire pressure without loading, b is a cross section width of the tire, and f is a deformation amount of the tire.

In another embodiment the loading calculation formula is as follow:

$$W = 2Pb\sqrt{2Rf - f^2}$$

where P, b and R are the tire parameters, P is the tire pressure, b is the cross section width of the tire, R is the tire radius, f is the deformation amount of the tire, and W is loading data of the tire.

In yet another embodiment the tire abnormal condition is a tire sinking critical value to compare with the tire deformation amount, and a tire loading critical value to compare with the tire loading data.

In yet another embodiment the step 2 further includes a sub-step of activating judgment of vehicle abnormal loading: compare the gradient data via a gradient abnormal datum; if the gradient data has a value greater than or equal to the gradient abnormal datum, enter step 3; if the gradient data has a value smaller than the gradient abnormal datum, redo execution of step 2.

In yet another embodiment the step 2 further includes another sub-step of judging vehicle inclination: get the gradient data of one tire and the gradient data of another tire, and compare the gradient data of these two tires; if the gradient data are same, judge the vehicle being normal; if the gradient data are different, judge the vehicle being inclined.

In yet another embodiment the step 1 is preceded by a sub-step of getting an original condition of the tire before execution: keep the vehicle at a no loading condition, get a tire original volume without loading through a tire volume calculation formula. The tire volume calculation formula is as follow:

$$V_0 = \pi R^2 b$$

where R is the tire radius, b is the cross section width of the tire, and $V_0$ is an original volume of the tire without loading.

In yet another embodiment the step 1 is preceded by another sub-step of providing tire parameters before execution.

Through the method set forth above, compared with the conventional techniques, the invention can provide the following advantageous features:

Judge vehicle abnormal loading through the tire deformation volume and the tire loading data can get the tire status better coincided with the actual tire condition, therefore provide accurate judgment result to avoid incidents caused by erroneous judgment.

The foregoing, as well as additional objects, features and advantages of the invention will be more readily apparent from the following detailed description, which proceeds with reference to the accompanying drawings.

BRIEF DESCRIPTION OF THE DRAWINGS

FIG. 1 is a schematic view of an embodiment of the invention implemented on a vehicle.
FIG. 2 is a schematic view of an embodiment of the invention regarding tire parameters.
FIG. 3 is a process flowchart of an embodiment of the invention.
FIG. 4 is a process flowchart of another embodiment of the invention.
FIG. 5A is a schematic view of an embodiment of the invention showing tire pressures.
FIG. 5B is a schematic view of an embodiment of the invention showing tire pressures on a non-inclined vehicle.
FIG. 5C is a schematic view of an embodiment of the invention showing tire pressures on an inclined vehicle.

DETAILED DESCRIPTION OF THE PREFERRED EMBODIMENTS

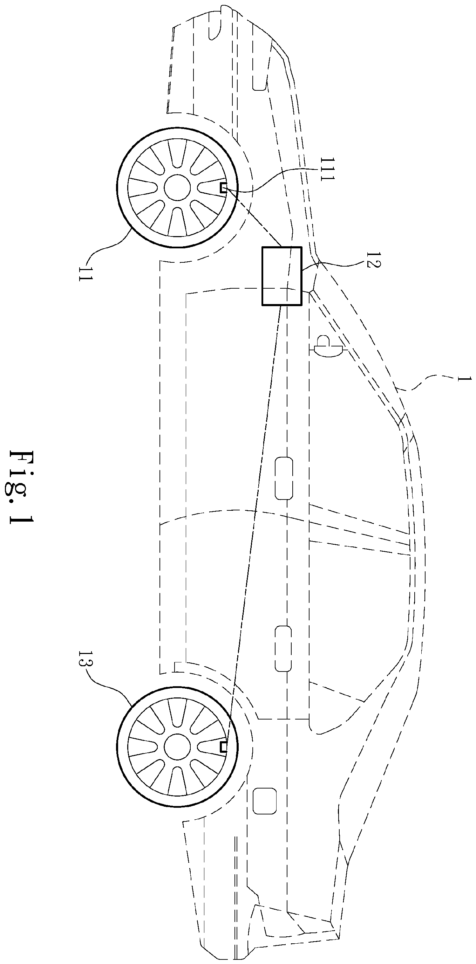

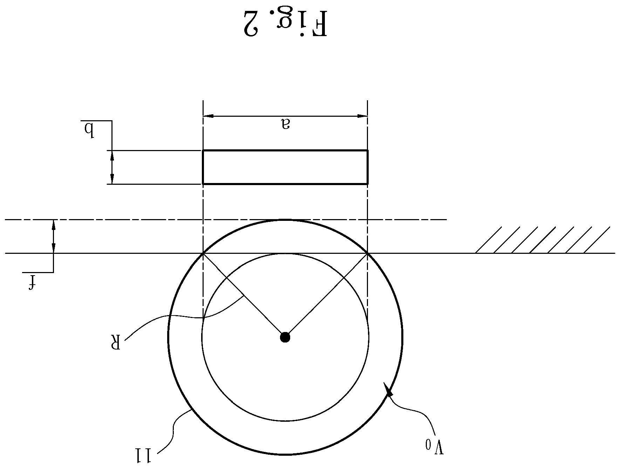

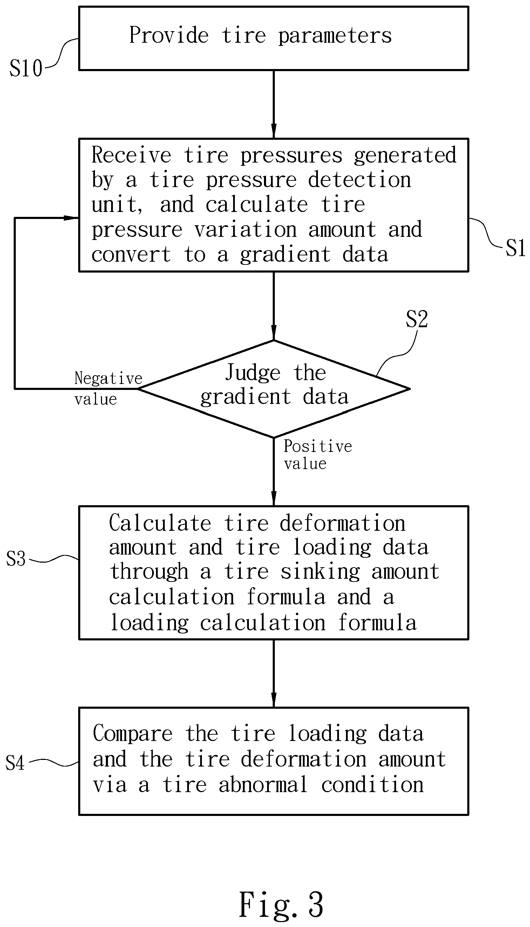

Please referring to FIGS. 1 and 2, the present invention aims to provide a method for judging abnormal loading of vehicles that is adopted for use on a vehicle 1 which has a plurality of tires 11 each includes at least one tire parameter to represent characteristics of the tire 11. Also referring to FIG. 2, the tire parameter can be specification data after the tire 11 has been produced but before being used, such as a tire radius R, a tire tread trace length a, a tire cross section width b, a tire original volume without loading $V_0$ or the like. Moreover, in the invention each tire 11 further is equipped with a tire pressure detection unit 111 which can detect interior status of the tire 11 in normal conditions. The tire pressure detection unit 111 outputs a tire pressure P after an inspection time period T (not shown in the drawings) has elapsed. In one embodiment the tire pressure detection unit 111 can be a tire interior sensing type or a tire exterior sensing type. In another embodiment the vehicle 1 can be equipped with an electronic device 12 to form information link with the tire pressure detection unit 111. The method of the invention can be loaded into the electronic device 12 via a programmable logic language.
Also referring to FIG. 3, the method for judging abnormal loading of vehicles of the invention comprises the following steps:

Step S1: Receive the tire pressures P generated by the tire pressure detection unit 111 during a plurality of inspection time periods T (not shown in the drawings) and calculate variation amount of each tire pressure P within each inspection time period T, and convert to a gradient data M1;
Step S2: Judge whether the gradient data M1 is positive in value; if yes, enter the next step; if no, redo execution of step 1;
Step S3: Calculate the tire pressure P obtained at the last time and the tire parameter via a tire sinking amount calculation formula to get a tire deformation amount f, and calculate the tire pressure P obtained at the last time and the tire parameter via a loading calculation formula to get a tire loading data; and
Step S4: Compare the tire loading data and the tire deformation amount f via a tire abnormal condition, in the event that the tire loading data and the tire deformation amount f coincide with the tire abnormal condition, judge the vehicle 1 in abnormal loading.

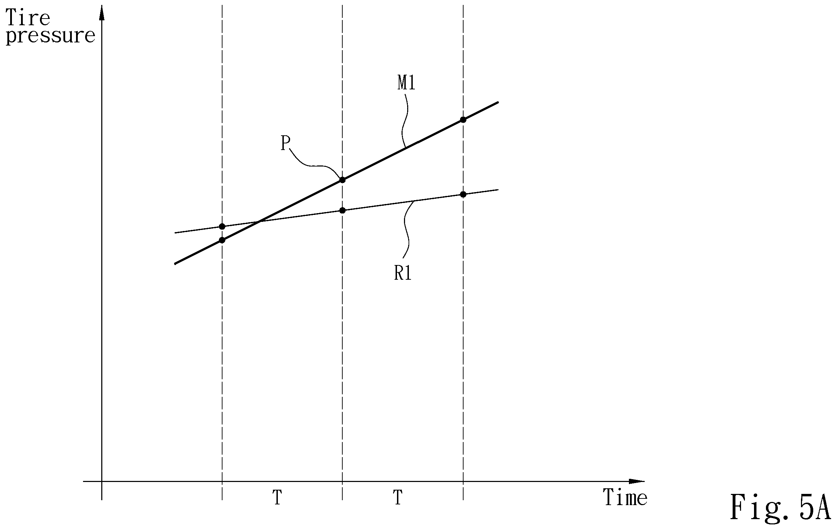

More specifically, at the beginning of implementation, first, have the information link of the electronic device 12 installed on one tire pressure detection unit 111 of the vehicle 1, and get consecutively a plurality of tire pressures P generated by the tire pressure detection unit 111 during a plurality of inspection time periods T; next, calculate variation amount of the tire pressures P during the inspection time periods T, and convert to a gradient data M1 (as shown in FIG. 5A), and enter Step 2. At step S2, judge whether the gradient data M1 is positive in value through the electronic device 12; if the outcome is positive, it means that loading of the vehicle 1 continuously increases, and enter step S3; if the outcome is negative, it means that loading of the vehicle 1 continuously decreases. At step S3, first, calculate the tire pressure P obtained at the last time and the tire parameter via the tire sinking amount calculation formula to get a tire deformation amount f. The tire sinking amount calculation formula mainly aims to calculate total deformation amount of the tire 11 after loading. The tire sinking amount calculation formula is as follow:

$$P = \frac{P_0 V_0}{V_0 - \left[\dfrac{2\sin^{-1}(\dfrac{\sqrt{2Rf - f^2}}{R})\pi R^2}{360} - \dfrac{(2\sqrt{2Rf - f^2})(R - f)}{2}\right]b}$$

where R, $V_0$, $P_0$ and b are respectively the tire parameters of the tire 11, R is a tire radius, $V_0$ is an original volume of a tire without loading, $P_0$ is an original tire pressure without loading, b is a cross section width of the tire, and f is a deformation amount of the tire. After the deformation amount f of the tire is obtained, get the tire loading data via a loading calculation formula as follow:

$$W = 2Pb\sqrt{2Rf - f^2}$$

where P, b and R are the tire parameters, P is the tire pressure obtained last time, b is the cross section width of the tire, R is the tire radius, f is the deformation amount of the tire, and W is loading data of the tire.

After the deformation amount f of the tire and the tire loading data have been obtained through the tire sinking amount calculation formula and the loading calculation formula, enter step S4 to compare the tire deformation amount f and the tire loading data via the tire abnormal condition. In the event that the tire loading data and the tire deformation amount f coincide with the tire abnormal condition, judge vehicle 1 in abnormal loading. Furthermore, the tire abnormal condition can be an allowable variation of the tire 11 when in use that is set during design of the tire by the tire manufacturer, such as deformation amount of the tire 11 or tire pressure variations after loading of the tire, or the like. More specifically, in one embodiment, the tire abnormal condition includes a tire sinking critical value to compare with the tire deformation amount f, and a tire loading critical value to compare with the tire loading data.

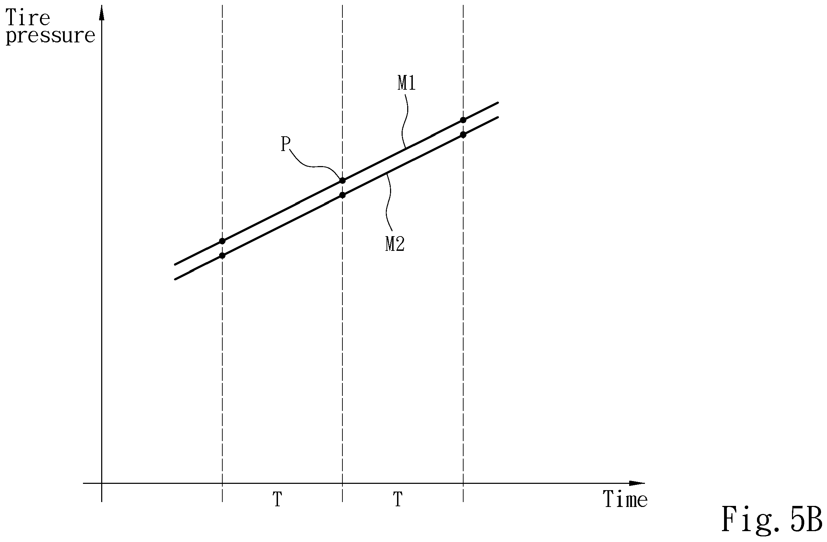

Please also referring to FIGS. 5A and 5B, in one embodiment the step S2 further includes a sub-step S21 of activating judgment of vehicle abnormal loading: compare the gradient data M1 with a gradient abnormal datum R1; if the gradient data M1 has a value greater than or equal to the gradient abnormal datum R1, enter step S3; if the gradient data M1 has a value smaller than the gradient abnormal datum R1, redo execution of step S2. More specifically, during implementation if the loading of the vehicle 1 increases steadily, the gradient data M1 of each tire 11 generated after detection also increases steadily. In the event that loading of the vehicle 1 increases abruptly, the gradient data M1 of the tire 11 generated via detection also has drastic change greater than or equal to the gradient abnormal datum R1, then the invention can initially judge that the vehicle has possibility of experiencing abnormal loading, enter step S3.

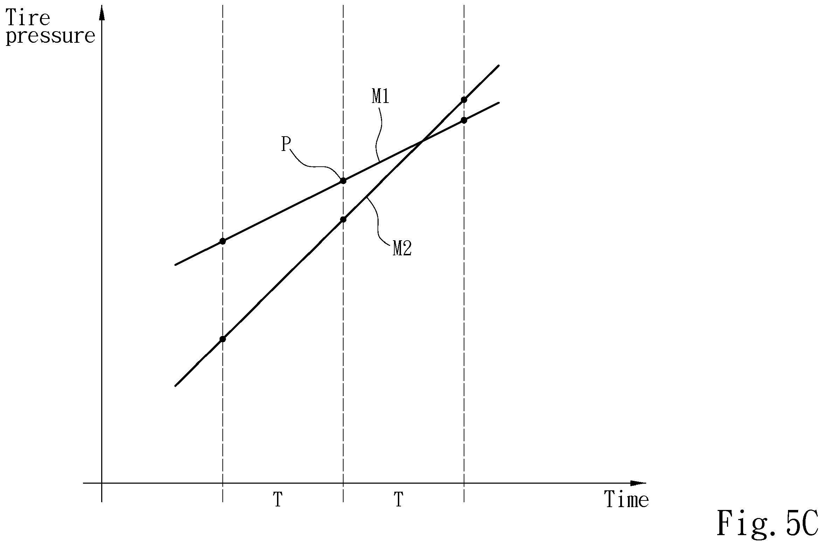

Moreover, also referring to FIG. 5C, in another embodiment the step S2 can further include a sub-step S22 of judging vehicle inclination: get the gradient data M1 of one tire 11 and another gradient data M2 of another tire 13, and compare the gradient data M1 and M2 of these two tires 11 and 13; if the gradient data M1 and M2 are same, judge the vehicle being normal; if the gradient data M1 and M2 are different, judge the vehicle being inclined. More specifically, in the event that the vehicle 1 suddenly has the loading increased at one side, the tire 13 at the corresponding side withstands a greater loading pressure than the other tire 11, hence the interior pressure of the tire 13 increases notably, and the gradient data M2 also is greater than the other gradient data M1 calculated for the other tire 11 to make the two gradient data M1 and M2 different, thereby the vehicle 1 can be deemed in an inclined condition.

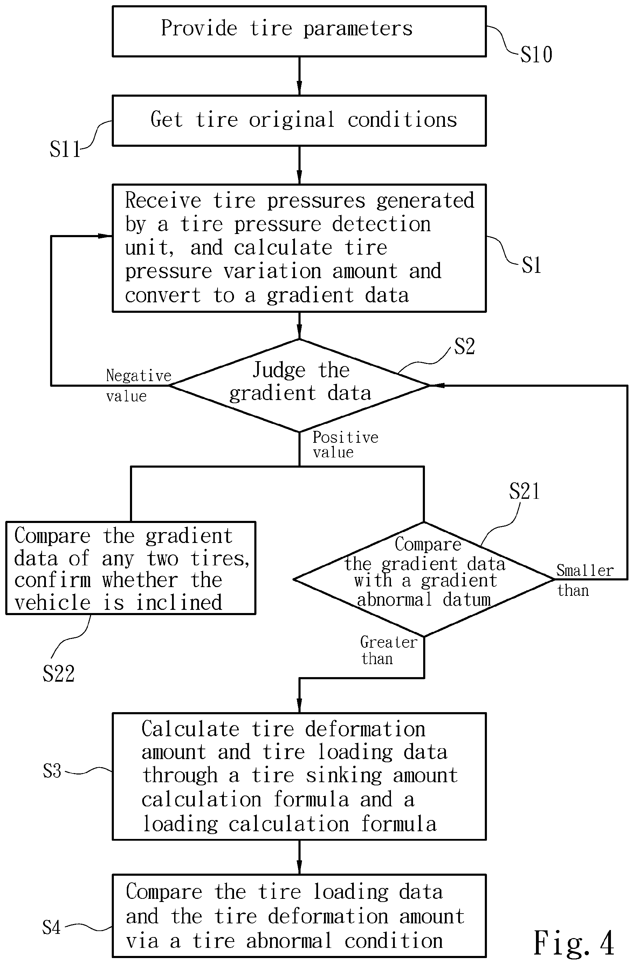

Also referring to FIG. 4, in yet another embodiment the step S1 can be preceded by a sub-step S11 of getting an original condition of the tire before execution: Keep the vehicle 1 at a without loading condition, get a tire original volume $V_0$ without loading through a tire volume calculation formula. The sub-step in this embodiment mainly is used on a replaced new tire 11 of the vehicle 1, and redo measurement of the tire interior volume after the tire 11 has been inflated and in a no loading condition to facilitate judgment of the invention later one to match more specific implementation conditions. The tire volume calculation formula is as follow:

$$V_0 = \pi R^2 b$$

where R is the tire radius, b is the cross section width of the tire, and is $V_0$ is an original volume of the tire without loading.

In short, there are numerous types of tires on the market at present, in order to make more precise measurement, in one embodiment of the invention, the step S1 can be preceded by a sub-step S10 of providing tire parameters before execution.

As a conclusion, the method for judging abnormal loading of vehicles provided by the invention includes: first, receive a plurality of tire pressures generated by a tire pressure detection unit at a plurality of inspection time periods, and calculate variation amount of the tire pressures and convert to a gradient data; next, judge whether the gradient data is positive in value, if yes, calculate the tire pressure obtained at the last time via a tire sinking amount calculation formula and the tire parameter to get a tire deformation amount, and calculate the tire pressure obtained at the last time via a loading calculation formula and the tire parameter to get a tire loading data; then compare the tire loading data and the tire deformation amount via a tire abnormal condition; if the tire loading data and the tire deformation amount coincide with the tire abnormal condition, judge the vehicle in abnormal loading. Thus it can resolve the problem of the conventional judgment method of not taking into account of actual tire conditions that is prone to cause erroneous judgment.

In summary there is disclosed a method for judging abnormal loading of vehicles includes the steps of: receive a plurality of tire pressures (P) generated by a tire pressure detection unit (111) during a plurality of inspection time periods (T) and calculate variation amount of the tire pressures (P) and convert to a gradient data (M1); judge whether the gradient data (M1) is positive in value, if positive, calculate the tire pressure (P) obtained at the last time and tire parameters via a tire sinking amount calculation formula to get a tire deformation amount (f), and calculate the tire pressure (P) obtained at the last time and the tire parameters via a loading calculation formula to get a tire loading data; and compare the tire loading data and the tire deformation amount (f) via a tire abnormal condition; judge the vehicle (1) in abnormal loading if the tire loading data and the tire deformation amount (f) coincide with the tire abnormal condition.

## Claims

1. A method for judging abnormal loading of vehicles adopted for use on a vehicle (1) which includes a plurality of tires (11) each including at least one tire parameter to represent tire characteristics and being equipped with a tire pressure detection unit (111) which detects interior status of the tire (11) in regular conditions and outputs a tire pressure (P) after elapse of an inspection time period (T), the method comprising the steps of:

   step 1: receiving tire pressures (P) generated by the tire pressure detection unit (111) at a plurality of inspection time periods (T) and calculating variation amount of the tire pressure (P) within each inspection time period (T), characterizedin that
   in step 1 the calculated variation amount is converted to a gradient data (M1); and that the method further comprises:
   step 2: judging whether the gradient data (M1) is positive in value;
   entering the next step if positive; renewing execution of step 1 if negative;
   step 3: calculating the tire pressure (P) obtained at the last time and the tire parameter through a tire sinking amount calculation formula to get a tire deformation amount (f), and calculating the tire pressure (P) obtained at the last time and the tire parameter via a loading calculation formula to get a tire loading data (W); and
   step 4: comparing the tire loading data (W) and the tire deformation amount (f) via a tire abnormal condition, and judging the vehicle (1) in abnormal loading when the comparing outcome coincides with the tire abnormal condition.

2. The method of claim 1, wherein the tire sinking amount calculation formula is:

$$P = \frac{P_0 V_0}{V_0 - \left[\frac{2\sin^{-1}(\frac{\sqrt{2Rf - f^2}}{R})\pi R^2}{360} - \frac{(2\sqrt{2Rf - f^2})(R - f)}{2}\right]b}$$

where $R$, $V_0$, $P_0$ and $b$ are respectively the tire parameters, $R$ is a tire radius, $V_0$ is an original volume of a tire without loading, $P_0$ is an original tire pressure without loading, $b$ is a cross section width of the tire, and $f$ is a deformation amount of the tire.

3. The method of claim 2, wherein the loading calculation formula is:

$$W = 2Pb\sqrt{2Rf - f^2}$$

where P, b and R are the tire parameters, P is the tire pressure, b is the cross section width of the tire, R is the tire radius, f is the deformation amount of the tire, and W is loading data of the tire.

4. The method of one of the preceding claims, wherein the tire abnormal condition is a tire sinking critical value for comparing with the tire deformation amount and a tire loading critical value for comparing with the tire loading data.

5. The method of one of the preceding claims, wherein the step 2 further includes a sub-step (S21) of activating judgment of vehicle abnormal loading: comparing the gradient data (M1) with a gradient abnormal datum (R1); entering step 3 when the gradient data (M1) has a value greater than or equal to the gradient abnormal datum (R1); renewing execution of step 1 when the gradient data (M1) has a value smaller than the gradient abnormal datum (R1).

6. The method of one of the preceding claims, wherein the step 2 further includes another sub-step (S22) of judging vehicle inclination: getting the gradient data (M1) of one tire (11) and another gradient data (M2) of another tire (13), and comparing the gradient data (M1, M2) of these two tires (11, 13); judging the vehicle (1) being normal when the gradient data (M1, M2) are same; judging the vehicle (1) being inclined when the gradient data (M1, M2) are different,

7. The method of one of the preceding claims, wherein the step 1 is preceded by a sub-step (S11) of getting an original condition of the tire (11) before execution: keeping the vehicle (1) in a without loading condition, and getting a tire original volume ($V_0$) without loading of each tire (11) through a tire volume calculation formula.

8. The method of claim 7, wherein the tire volume calculation formula is:

$$V_0 = \pi R^2 b$$

where R is a tire radius, b is a cross section width of the tire, and $V_0$ is an original volume of the tire without loading.

9. The method of one of the preceding claims, wherein the step 1 is preceded by another sub-step (S10) of providing the tire parameter before execution.

## Patentansprüche

1. Verfahren zum Beurteilen einer abnormalen Beladung eines Fahrzeuges, wobei das Verfahren angepasst ist zur Verwendung an einem Fahrzeug mit einer Vielzahl von Reifen (11), die jeweils mindestens einen Reifenparameter aufweisen, die die Reifen-Charakteristika darstellen, und mit einer Reifen-DruckEinheit (111) ausgestattet sind, die den inneren Zustand des Reifens (11) unter normalen Umständen erkennt und nach dem Ablaufen einer Inspektions-Zeitdauer (T) einen Reifen-Druck (P) ausgibt, wobei das Verfahren die Schritte umfasst:

Schritt 1: Erhalten eines Reifen-Druckes (P), der durch die Reifen-DruckEinheit (111) an einer Vielzahl von Inspektions-Zeitdauern (T) erzeugt wurde, und Berechnen eines Abweichungs-Betrages des Reifen-Druckes (P) in jeder Inspektions-Zeitdauer (T),

**dadurch gekennzeichnet, dass**

in Schritt 1 der berechnete Abweichungs-Betrag in Verlaufs-Daten (M1) umgewandelt wird; und dass das Verfahren des Weiteren umfasst:

Schritt 2: Beurteilen ob die Verlaufs-Daten (M1) einen positiven Wert haben; Anfangen mit dem nächsten Schritt falls positiv; erneute Ausführung des Schrittes 1 falls negativ;
Schritt 3: Berechnen des Reifen-Druckes (P), der in der letzten Zeitinstanz erhalten wurde, und des Reifenparameters über eine Reifenabsenkbetrag-Berechnungsformel, um einen Reifen-Deformationsbetrag (f) zu erhalten, und um den Reifen-Druck (P) zu berechnen, der zur letzten Zeitinstanz erhalten wurde und den Reifenparameter über eine Beladungs-Berechnungsformel, um Reifen-Beladungs-Daten (W) zu erhalten; und

Schritt 4: Vergleichen der Reifen-Beladungs-Daten (W) und des Reifen-Deformationsbetrages (f) über die Reifen-Abnormalitäts-Bedingung, und Beurteilen, dass sich das Fahrzeug (1) in einem abnormalen Beladungs-Zustand befindet, wenn der Ausgang des Vergleiches mit einer Reifen-Abnormalitäts-Bedingung übereinstimmt.

2. Verfahren nach Anspruch 1, wobei die Reifenabsenkbetrag-Berechnungsformel lautet:

$$P = \frac{P_0 V_0}{V_0 - \left[\dfrac{2 \sin^{-1}(\frac{\sqrt{2Rf - f^2}}{R}) \pi R^2}{360} - \dfrac{(2\sqrt{2Rf - f^2})(R - f)}{2}\right] b}$$

wobei R, $V_0$, $P_0$ und b jeweils Reifen-Parameter sind, R ist ein Reifen-Radius, $V_0$ ist ein ursprüngliches Volumen eines Reifens ohne Beladung, $P_0$ ist ein ursprünglicher Reifen-Druck ohne Beladung, b ist eine Querschnitts-Weite des Reifens und f ist der Deformationsbetrag des Reifens.

3. Verfahren nach Anspruch 2, wobei die Beladungs-Berechnungsformel lautet:

$$W = 2Pb\sqrt{2Rf - f^2}$$

wobei P, b und R Reifenparameter sind, und wobei P der Reifen-Druck ist, und wobei b die Querschnitts-Weite des Reifens ist, und wobei R der Reifen-Radius ist, und wobei f der Deformationsbetrag des Reifens ist, und wobei W die Beladungsdaten des Reifens sind.

4. Verfahren nach einem der vorherigen Ansprüche, wobei die Reifen-Abnormalitäts-Bedingung ein kritischer Reifenabsenkbetrags-Wert ist zum Vergleichen mit den Beladungsdaten des Reifens.

5. Verfahren nach einem der vorherigen Ansprüche, wobei der Schritt 2 des Weiteren einen Unterschritt (S21) des Aktivierens der Beurteilung der abnormalen Fahrzeug-Beladung umfasst:

Vergleichen der Verlaufs-Daten (M1) mit abnormalen Verlaufs-Daten (R1); Anfangen mit Schritt 3, wenn die Verlaufs-Daten (M1) einen größeren Wert haben oder gleich mit den abnormalen Verlaufs-Daten (R1) sind; erneutes Ausführen von Schritt 1, wenn die Verlaufs-Daten (M1) einen kleineren Wert haben, als die abnormalen Verlaufs-Daten (R1).

6. Verfahren nach einem der vorherigen Ansprüche, wobei der Schritt 2 des Weiteren noch einen Unterschritt (S22) der Beurteilung der Fahrzeug-Neigung umfasst:

Erhalten der Verlaufs-Daten (M1) eines Reifens (11) und weitere Verlaufs-Daten (M2) eines anderen Reifens (13), und Vergleichen der Verlaufs-Daten (M1,M2) dieser zwei Reifen (11,13) miteinander; Beurteilen, dass das Fahrzeug (1) normal ist, wenn die Verlaufs-Daten (M1,M2) gleich sind; Beurteilen, dass das Fahrzeug (1) geneigt ist, wenn die Verlaufs-Daten (M1,M2) unterschiedlich sind.

7. Verfahren nach einem der vorherigen Ansprüche, wobei dem Schritt 1 ein Unterschritt (S11) des Erhaltens des ursprünglichen Zustandes des Reifens (11) vorweg geht:

Halten des Fahrzeuges (1) in einem nicht belasteten Zustand, und Ermitteln des ursprünglichen Reifenvolumens ($V_0$) ohne Belastung jedes Reifens (11) über eine Volumenberechnungsformel.

8. Verfahren nach Anspruch 2, wobei die Volumenberechnungsformel lautet:

$$V_0 = \pi R^2 b$$

wobei R ein Reifen-Radius ist, und wobei b die Querschnitts-Weite des Reifens ist, und wobei $V_0$ ein ursprüngliches Volumen des Reifens ohne Beladung ist.

9. Verfahren nach einem der vorherigen Ansprüche, wobei dem Schritt 1 ein weiterer Unterschritt (S10) des Bereitstellens der Reifenparameter vor der Ausführung vorweg geht.

**Revendications**

1. Un procédé de détermination d'un chargement anormal de véhicule retenu pour une utilisation d'un véhicule (1) qui comprend une pluralité de pneus (11) comprenant chacun au moins un paramètre de pneu représentatif de caractéristiques du pneumatique et étant équipé d'une unité de détection de pression pneumatique (111) qui détecte l'état intérieur du pneumatique (11) dans des conditions normales et délivre une pression de pneumatique (P) après l'écoulement d'une période de temps de contrôle (T), le procédé comprenant les étapes :

   étape 1: la réception des pressions de pneumatiques (P) générées par l'unité de détection de pression pneumatique (111) sur une pluralité de périodes de temps de contrôle (T) et le calcul de la variation de la pression pneumatique (P) à l'intérieur de chaque période de temps de contrôle (T), **caractérisé en ce que**

   dans l'étape 1 la variation calculée est convertie en une valeur de gradient (M1) ; et **en ce que** le procédé comporte en outre :

   étape 2: déterminer si la valeur de gradient (M1) est positive; et dans l'affirmatif passer à l'étape suivante ; renouveler l'étape 1 en cas de valeur négative ;
   étape 3 : calculer la pression pneumatique (P) obtenue la dernière fois et le paramètre de pneu via une formule de calcul de la quantité d'amortissement pneumatique pour obtenir une quantité de déformation du pneumatique (f), et le calcul de la pression de pneumatique (P) obtenue précédemment et le paramètre de pneumatique via une formule de calcul de charge pour obtenir une donnée de charge de pneumatique (W) ; et
   étape 4: comparer les données de chargement de pneumatique (W) avec la valeur de déformation du pneumatique (f) par l'intermédiaire d'une condition anormale de pneumatique, et déterminer que le véhicule (1) est dans un état de charge anormale lorsque le résultat de la comparaison coïncide avec la condition anormale des pneus.

2. Le procédé selon la revendication 1, dans lequel la formule de calcul de la quantité d'amortissement est:

$$P = \frac{P_0 V_0}{V_0 - \left[\frac{2\sin^{-1}\left(\frac{\sqrt{2Rf - f^2}}{R}\right)\pi R^2}{360} - \frac{(2\sqrt{2Rf - f^2})(R - f)}{2}\right]b}$$

dans laquelle R, $V_0$, $P_0$ et b sont respectivement les paramètres de pneu, R est un rayon de pneu, $V_0$ est une volume initial d'un pneumatique sans chargement, P0is une pression de gonflage initiale sans chargement, b est une largeur de section du pneumatique, et f est une quantité de déformation du pneumatique.

3. Le procédé selon la revendication 2, dans lequel la formule de calcul de charge est la suivante:

$$W = 2Pb\sqrt{2Rf - f^2}$$

où P, b et R sont les paramètres de pneu, P est la pression du pneumatique, b est la largeur de la section transversale du pneumatique, R est le rayon du pneumatique, f est la quantité de déformation du pneumatique, et W est la donnée de chargement du pneumatique.

4. Le procédé selon l'une des revendications précédentes, dans lequel la condition anormale de pneu est une valeur critique d'amortissement pneumatique pour la comparaison avec la quantité de déformation du pneumatique et une valeur critique de chargement pneumatique pour la comparaison avec la donnée de chargement pneumatique.

5. Le procédé selon l'une des revendications précédentes, dans lequel l'étape 2 comprend en outre une sous-étape (S21) d'activation de la détermination de chargement anormal de véhicule : en comparant les données de gradient (M1) avec une donnée anormale de gradient (R1); et l'entrée en étape 3 lorsque la donnée de gradient (M1) a une valeur supérieure ou égale à la donnée anormale de gradient (R1); le renouvellement de l'exécution de l'étape 1, lorsque la donnée de gradient (M1) a une valeur inférieure à la donnée anormale de gradient (R1).

6. Le procédé selon l'une des revendications précédentes, dans lequel l'étape 2 comprend en outre un autre sous-étape (S22) de détermination de l'inclinaison du véhicule : en obtenant la donnée de gradient (M1) pour un pneumatique (11) et une autre donnée de gradient (M2) d'un autre pneumatique (13), et en comparant les données de gradient (M1, M2) de ces deux pneumatiques (11, 13); en déterminant que le véhicule (1) est dans une situation normale lorsque les données de gradient (M1, M2) sont identiques; déterminer que le véhicule (1) est incliné lorsque les données de gradient (M1, M2) sont différents.

7. Le procédé selon l'une des revendications précédentes, dans lequel l'étape 1 est précédée d'une sous-étape (S11) consistant à obtenir un état initial du pneumatique (11) avant exécution de: maintien du véhicule (1) dans une condition hors chargement, et obtention d'un volume initial des pneus (V0) hors chargement pour chaque pneumatique (11) par une formule de calcul du volume de pneus.

8. Le procédé selon la revendication 7, dans lequel la formule de calcul du volume du pneu est la suivante:

$$V_0 = \pi R^2 b$$

où R est un rayon du pneu, b est une largeur de section du pneu , et $V_0$ is un volume initial du pneu hors chargement.

9. Le procédé selon l'une des revendications précédentes, dans lequel l'étape 1 est précédée d'une autre sous-étape (S10) consistant à fournir le paramètre de pneu avant exécution.

Fig. 1

Fig. 2

```
┌─────────────────────────────────────────────┐
│           Provide tire parameters            │
│ S10                                          │
└─────────────────────────────────────────────┘
                      │
                      ▼
┌─────────────────────────────────────────────┐
│ Receive tire pressures generated             │
│ by a tire pressure detection                 │
│ unit, and calculate tire                     │
│ pressure variation amount and        S1      │
│ convert to a gradient data                   │
└─────────────────────────────────────────────┘
                      │
                      ▼                 S2
                  ╱───────────╲
    Negative    ╱  Judge the   ╲
    value      ◄   gradient data ►
                  ╲───────────╱
                      │
                 Positive
                 value
                      │
                      ▼
┌─────────────────────────────────────────────┐
│      Calculate tire deformation              │
│      amount and tire loading data            │
│ S3   through a tire sinking amount           │
│      calculation formula and a               │
│      loading calculation formula             │
└─────────────────────────────────────────────┘
                      │
                      ▼
┌─────────────────────────────────────────────┐
│ Compare the tire loading data                │
│ and the tire deformation amount              │
│ S4  via a tire abnormal condition            │
└─────────────────────────────────────────────┘
```

Fig. 3

```
┌─────────────────────────────────────┐
│        Provide tire parameters       │ ─── S10
└─────────────────────────────────────┘
                    │
                    ▼
┌─────────────────────────────────────┐
│      Get tire original conditions    │
└─────────────────────────────────────┘
      S11
                    │
                    ▼
┌─────────────────────────────────────┐
│ Receive tire pressures generated     │
│ by a tire pressure detection         │
│ unit, and calculate tire             │ ─── S1
│ pressure variation amount and        │
│ convert to a gradient data           │
└─────────────────────────────────────┘
                    │
                    ▼
           Judge the gradient data ─── S2
    Negative value          Positive value     Smaller than
                                  │
         Compare the gradient     Compare the gradient data
         data of any two tires,   with a gradient abnormal datum ─── S21
         confirm whether the
         vehicle is inclined      Greater than
              S22
```

Compare the gradient data of any two tires, confirm whether the vehicle is inclined   S22

Compare the gradient data with a gradient abnormal datum   S21

```
┌─────────────────────────────────────┐
│ Calculate tire deformation           │
│ amount and tire loading data         │
│ through a tire sinking amount        │ S3
│ calculation formula and a            │
│ loading calculation formula          │
└─────────────────────────────────────┘
                    │
                    ▼
┌─────────────────────────────────────┐
│ Compare the tire loading data        │
│ and the tire deformation amount      │ S4
│ via a tire abnormal condition        │
└─────────────────────────────────────┘
```

Fig. 4

Fig. 5A

Fig. 5B

EP 3 006 234 B1

Fig. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011004028 A1
- EP 2679411 A2

- US 2003058118 A1